# EUROPÄISCHE PATENTSCHRIFT

(11) **EP 3 864 352 B1**
(45) Veröffentlichungstag und Bekanntmachung des Hinweises auf die Patenterteilung: **03.08.2022**
(21) Anmeldenummer: 19812700.3
(22) Anmeldetag: 14.11.2019
(51) Int. Cl.: B60H 1/32, B61D 27/00, F25B 23/00, F25B 7/00, F25B 25/00

(54) **ANORDNUNG ZUR KÄLTEERZEUGUNG FÜR EIN TRIEBFAHRZEUG**
ARRANGEMENT FOR REFRIGERATION FOR A MOTOR VEHICLE
AGENCEMENT DE RÉFRIGÉRATION POUR UN VÉHICULE À MOTEUR

(30) Priorität: 14.12.2018 DE 102018221771
(43) Veröffentlichungstag der Anmeldung: 18.08.2021
(73) Patentinhaber: Siemens Mobility GmbH, 81739 München (DE)
(72) Erfinder: WICHMANN, Rainer, 85622 Feldkirchen (DE); MEHLAN, Markus, 85757 Karlsfeld (DE)
(86) Internationale Anmeldenummer: PCT/EP2019/081289
(87) Internationale Veröffentlichungsnummer: WO 2020/120063

(56) Entgegenhaltungen:
- WO-A1-2018/024359
- DE-A1-102015 002 166

## Beschreibung

Die Erfindung betrifft eine Anordnung zur Kälteerzeugung für ein Triebfahrzeug.

Zur direkten Kühlung von Komponenten oder zur Klimatisierung von Personenaufenthaltsräumen bzw. von Nutzräumen von Triebfahrzeugen werden Kältemaschinen und Kühlungen verwendet. Der für die Klimageräte und Kühlgeräte zur Verfügung stehende Bauraum sowie deren Gewicht werden begrenzt durch den benötigten Bauraum und Gewicht für Traktionsanlagen, Fahrzeugstruktur und Personen, durch vorgegebene Bogenradien und durch einzuhaltende maximale Achslasten.

Benötigte Komponenten für eine vorzunehmende Klimatisierung oder Kühlung sollen unabhängig von anderen Zugkomponenten betreibbar sein, um eine modulare und entkoppelte Klimatisierung von Räumen oder Kühlung von Komponenten sicherzustellen.

Eine EU-Verordnung über fluorierte Treibhausgase schränkt die Verwendung von Kältemitteln mit einem hohen "Global Warming Potential" ein. Kältemittel mit einem geringen "Global Warming Potential" wiederum sind oft als brennbar eingestuft und können nur mit Einschränkungen in einer Klimatisierung eines Schienenfahrzeugs verwendet werden - beispielsweise dürfen sie nicht im sogenannten "Crashbereich" des Schienenfahrzeugs bzw. Triebfahrzeugs eingesetzt werden.

Eine Benutzung von nicht-brennbaren Kältemitteln ist möglich, jedoch weisen diese bei hohen Umgebungstemperaturen einen schlechteren Wirkungsgrad auf und resultieren in einer erheblichen Kostensteigerung. Bei einigen Kältemitteln steigt der Betriebsdruck bei hoher Temperatur aufgrund eines transkritischen Prozesses stark an. Entsprechend sind dann sehr hohe Druckfestigkeiten und damit sehr spezielle Komponenten nötig.

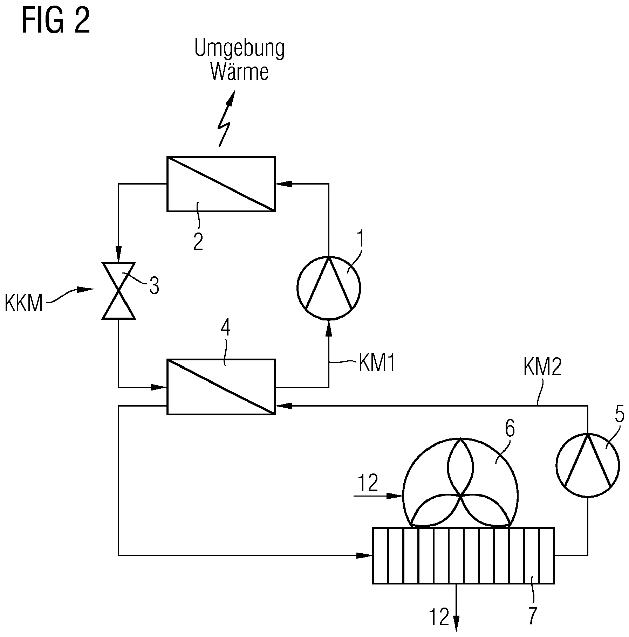

Es ist bekannt, zur Kälteerzeugung in einem Schienenfahrzeug bzw. Triebfahrzeug eine Kompressionskältemaschine KKM zu verwenden. Eine beispielhafte Ausgestaltung mit Verwendung der Kälte zur Klimatisierung ist in FIG 2 gezeigt.

Die Kompressionskältemaschine KKM weist als Hauptkomponenten einen Kompressor 1, einen Verflüssiger 2, eine Drossel 3, einen Verdampfer 4 und ein Trägermedium auf.

Das Trägermedium wird dazu benutzt, Kälte oder Wärme innerhalb eines Kreislaufs zu transportieren.

Ein Trägermedium KM1, das die Funktion eines Kältemittels aufweist, bewegt sich in einem geschlossenen ersten Kreislauf, bestehend aus den oben genannten Hauptkomponenten. Das Trägermedium KM1 erfährt nacheinander verschiedene Änderungen im Aggregatszustand.

Das Trägermedium KM1 des ersten Kreislaufs wird nachfolgend auch als erstes Trägermedium KM1 bezeichnet.

Das gasförmige erste Trägermedium KM1 wird durch den Kompressor 1 verdichtet und an den nachgeschalteten Verflüssiger 2 weitergeleitet.

Im Verflüssiger 2 kondensiert bzw. verflüssigt sich das erste Trägermedium KM1 und gibt Wärme ab. Die Wärme wird hier an die Umgebungsluft des Schienenfahrzeugs bzw. Triebfahrzeugs abgegeben. Der Verflüssiger 2 ist als Flüssigkeits-Luft-Wärmetauscher ausgebildet.

Das flüssige erste Trägermedium KM1 gelangt an die Drossel 3, die dem Verflüssiger 2 nachgeschaltet ist.

Aufgrund einer Druckänderung wird das flüssige erste Trägermedium KM1 über die Drossel 3 entspannt und gelangt zum Verdampfer 4, der der Drossel 3 nachgeschaltet ist.

Im Verdampfer 4 verdampft das erste Trägermedium KM1 unter Wärmeaufnahme bei niedriger Temperatur.

Durch den Verdampfer 4 nimmt das erste Trägermedium KM1 Wärme aus einem zweiten Kreislauf auf, der ebenfalls geschlossen ist und ein Trägermedium KM2 beinhaltet. Der Verdampfer 4 ist als Flüssigkeits-Flüssigkeits-Wärmetauscher ausgebildet.

Der Verdampfer 4 ist in den zweiten Kreislauf, bestehend aus einem Kompressor 5, einem Lüfter 6, einem Wärmetauscher 7 und dem Trägermedium KM2 eingebunden.

Das Trägermedium KM2, das die Funktion eines Kälte- bzw. Wärmeträgers aufweist und beispielswiese ein flüssiges Kühlmittel ist, bewegt sich in dem geschlossenen zweiten Kreislauf, bestehend aus den oben genannten Komponenten.

Das Trägermedium KM2 erfährt dabei keine Änderungen im Aggregatszustand.

Der Lüfter 6 transportiert Luft 12, die aus einem Nutzraum (z.B. einem Personenaufenthaltsraum, dem Führerstand des Trieb- bzw. Schienenfahrzeugs, etc.) angesaugt wird, durch den Wärmetauscher 7.

Der Wärmetauscher 7 ist als Luft-Flüssigkeits-Wärmetauscher ausgebildet und kühlt die ihm zugeführte Luft 12, indem er ihr Wärme entzieht und diese an das Trägermedium KM2 des zweiten Kreislaufs übergibt.

Das Trägermedium KM2 des zweiten Kreislaufs wird nachfolgend als zweites Trägermedium KM2 bezeichnet.

Das erwärmte zweite Trägermedium KM2 gelangt unter Mitwirkung des Kompressors 5 vom Wärmetauscher 7 zum Verdampfer 4.

Wie geschildert entnimmt der Verdampfer 4 Wärme aus dem zweiten Trägermedium KM2, so dass letztlich das zweite Trägermedium KM2 abgekühlt wird.

Das abgekühlte zweite Trägermedium KM2 wird dem Wärmetauscher 7 zugeführt und dort zur Kühlung bzw. zum Wärmeentzug der zugeführten Luft 12 verwendet.

Zusammengefasst wird im zweiten Kreislauf Wärme der Luft 12 entnommen und zum Verdampfer 4 transportiert. Durch den Verdampfer 4 wird die Wärme vom ersten Kreislauf an den zweiten Kreislauf übergeben und zum Verflüssiger 2 transportiert. Durch den Verflüssiger 2 wird die Wärme vom ersten Kreislauf an die Umwelt abgegeben.

Aufgrund der verwendeten Wärmetauscher 2, 4 und 7 weisen die gekoppelten Kreisläufe eine begrenzte Gesamtkühlleistung auf.

Aus Dokument WO 2018/024359 A1 ist eine Klimatisierungseinrichtung für einen Omnibus bekannt.

Aus Dokument DE 102015002166 A1 ist eine Fahrzeugklimaanlage bekannt.

Beide Dokumente, WO 2018/024359 A1 und DE 102015002166 A, offenbaren eine Anordnung zur Kälteerzeugung
- mit einem geschlossenen ersten Kreislauf, der als Kompressions-Kältema ausgebildet ist, und ein Kältemittel als erstes Trägermedium, einen Verdampfer, der als Flüssigkeits-Flüssigkeits-Wärmetauscher ausgebildet ist, einen Verflüssiger, der als Flüssigkeits-Flüssigkeits-Wärmetauscher ausgebildet ist, einen Kompressor und eine Drossel aufweist, so dass das erste Trägermedium vom Verdampfer über den Kompressor zum Verflüssiger und vom Verflüssiger über die Drossel zurück zum Verdampfer gelangt,
- mit einem geschlossenen zweiten Kreislauf, der den Verdampfer, einen Wärmetauscher sowie ein flüssiges zweites Trägermedium zum Wärmetransport aufweist, so dass das zweite Trägermedium vom Wärmetauscher zum Verdampfer und vom Verdampfer zurück zum Wärmetauscher gelangt,
- mit einem geschlossenen dritten Kreislauf, der den Verflüssiger, einen ersten Wärmetauscher, einen zweiten Wärmetauscher, ein flüssiges drittes Trägermedium zum Wärmetransport aufweist,
- bei der der zweite Kreislauf über den Verdampfer mit dem ersten Kreislauf gekoppelt ist,
- bei der der erste Kreislauf über den Verflüssiger mit dem dritten Kreislauf gekoppelt ist.

Es ist die Aufgabe der vorliegenden Erfindung, eine verbesserte Anordnung zur Kälteerzeugung für ein Triebfahrzeug, insbesondere für Aufenthaltsräume oder Nutzräume des Triebfahrzeugs, anzugeben.

Diese Aufgabe wird durch die Merkmale des Anspruchs 1 gelöst.

Vorteilhafte Weiterbildungen sind in den weiteren Ansprüchen angegeben.

Die Erfindung betrifft eine Anordnung zur Kälteerzeugung für ein Triebfahrzeug mit einem geschlossenen ersten Kreislauf, der als Kompressions-Kältemaschine ausgebildet ist und ein Kältemittel als erstes Trägermedium sowie einen Verdampfer als auch einen Verflüssiger beinhaltet. Der Verdampfer ist zur Aufnahme von Wärme in den ersten Kreislauf ausgebildet. Der Verflüssiger ist zur Abgabe von Wärme aus dem ersten Kreislauf ausgebildet.

Der erste Kreislauf ist über den Verdampfer mit einem geschlossenen zweiten Kreislauf gekoppelt, der bevorzugt Teil des Triebfahrzeugs ist. Der zweite Kreislauf beinhaltet ein flüssiges zweites Trägermedium zum Wärmetransport.

Der zweite Kreislauf ist derart ausgebildet, dass für Kühlungszwecke Wärme an einem vorbestimmten Ort entnommen und an das zweite Trägermedium (KM2) übergeben wird.

Die Wärme gelangt durch das zweite Trägermedium an den Verdampfer zur Wärmeübergabe an den ersten Kreislauf.

Bevorzugt ist der zweite Kreislauf derart ausgebildet, dass zur Kühlung einer Komponente des Triebfahrzeugs und/oder zur Kühlung eines Personenaufenthaltsraums des Triebfahrzeugs Wärme von der Komponente und/oder Wärme aus der Luft des Personenaufenthaltsraums entnommen und an das zweite Trägermedium (KM2) übergeben wird. Erfindungsgemäß gelangt dann die übergebene Wärme durch das zweite Trägermedium an den Verdampfer (4) zur Wärmeübergabe an den ersten Kreislauf.

Der Personenaufenthaltsraum ist bevorzugt Teil des Triebfahrzeugs.

Der erste Kreislauf ist über den Verflüssiger mit einem geschlossenen dritten Kreislauf gekoppelt, der bevorzugt Teil des Triebfahrzeugs ist. Der dritte Kreislauf beinhaltet ein flüssiges drittes Trägermedium zum Wärmetransport. Der dritte Kreislauf ist derart ausgebildet, dass durch den Verflüssiger in den dritten Kreislauf übertragene Wärme des ersten Kreislaufs zusammen mit einer Wärme von Traktionsanlagen des Triebfahrzeugs an die Umwelt bzw. Umgebung des Triebfahrzeugs übertragen wird.

Als Kältemittel wird in Übereinstimmung mit Normen ein Arbeitsmittel bzw. ein Fluid verstanden, das zur Wärmeübertragung in einer Kälteanlage eingesetzt wird und das bei niedriger Temperatur und niedrigem Druck Wärme aufnimmt und bei höherer Temperatur und höherem Druck Wärme abgibt. Dabei erfolgen Zustandsänderungen des Fluids.

Erfindungsgemäß ist der erste Kreislauf derart ausgestaltet ist, dass Wärme über den Verdampfer an das erste Trägermedium übergeben wird und durch dieses an den Verflüssiger zur Wärmeabgabe gelangt.

Erfindungsgemäß enthält der zweite Kreislauf einen Wärmetauscher, so dass Wärme vorteilhafterweise aus der Luft des Personenaufenthaltsraums durch den Wärmetauscher entnommen und an das zweite Trägermedium übergeben wird und die Wärme durch das zweite Trägermedium an den Verdampfer zur Wärmeübergabe an den ersten Kreislauf gelangt.

Erfindungsgemäß enthält der dritte Kreislauf einen ersten Wärmetauscher und einen zweiten Wärmetauscher. Der zweite Wärmetauscher ist zur Kühlung der Traktionsanlagen des Triebfahrzeugs ausgebildet und angeordnet, so dass Wärme des ersten Kreislaufs über den Verflüssiger an das dritte Trägermedium übergeben wird und durch das dritte Trägermedium die Wärme des ersten Kreislaufs zusammen mit der vom zweiten Wärmetauscher bereitgestellten Wärme der Traktionsanlagen zum ersten Wärmetauscher gelangt, der dann die summierte Wärme an die Umgebungsluft überträgt.

Erfindungsgemäß weist der erste Kreislauf neben dem Verflüssiger, dem Verdampfer und dem ersten Trägermedium zusätzlich einen Kompressor und eine Drossel auf. Diese bilden einen geschlossenen Kreislauf, so dass das erste Trägermedium vom Verdampfer über den Kompressor zum Verflüssiger und vom Verflüssiger über die Drossel zurück zum Verdampfer gelangt.

Erfindungsgemäß weist der zweite Kreislauf neben dem Verdampfer, dem Wärmetauscher und dem zweiten Trägermedium zusätzlich einen Kompressor auf. Diese bilden einen geschlossenen Kreislauf, so dass das zweite Trägermedium vom Wärmetauscher über den Kompressor zum Verdampfer und vom Verdampfer zurück zum Wärmetauscher gelangt.

Erfindungsgemäß weist der dritte Kreislauf neben dem Verflüssiger, dem ersten und dem zweiten Wärmetauscher und dem dritten Trägermedium zusätzlich einen Kompressor auf. Diese bilden einen geschlossenen Kreislauf, so dass das dritte Trägermedium vom Verflüssiger über den Kompressor zum zweiten Wärmetauscher und von diesem über den ersten Wärmetauscher zurück zum Verflüssiger gelangt.

Erfindungsgemäß sind das zweite das dritte Trägermedium dazu ausgebildet, Kälte oder Wärme als Kälte- bzw. Wärmeträger innerhalb des jeweiligen geschlossenen Kreislaufs zu transportieren.

Erfindungsgemäß ist der Verdampfer als auch der Verflüssiger des ersten Kreislaufs als Flüssigkeits-Flüssigkeits-Wärmetauscher ausgebildet.

Erfindungsgemäß ist der Wärmetauscher des zweiten Kreislaufs als Luft-Flüssigkeits-Wärmetauscher ausgebildet. Vorteilhafterweise ist der erste Wärmetauscher des dritten Kreislaufs als Flüssigkeits-Luft-Wärmetauscher ausgebildet. In einer bevorzugten Weiterbildung wird als zweites und/oder als drittes Trägermedium Wasser, insbesondere ein mit einem Frostschutzmittel (z.B. Antifrogen) versetztes Wasser, verwendet.

In einer bevorzugten Weiterbildung werden mehrere erste Kreisläufe kaskadiert aufgebaut und wirken dann entsprechend zusammen.

In einer bevorzugten Weiterbildung sind weitere Flüssigkeitskreisläufe zwischen dem ersten Kreislauf und dem dritten Kreislauf geschaltet.

In einer bevorzugten Weiterbildung wird Kälteleistung, die im Verdampfer abgeführt wird, zur Kühlung von anderen Komponenten des Triebfahrzeuges (z.B. zur Kühlung von Batterien) verwendet.

Durch die vorliegende Erfindung wird Bauraum eingespart, da der Verflüssiger des ersten Kreislaufs als Flüssigkeits-Flüssigkeits-Wärmetauscher ausgebildet ist.

Durch die Koppelung des ersten und des dritten Kreislaufs über den Verflüssiger ist lediglich eine geringe Änderung des im Triebfahrzeug vorhandenen und erfindungsgemäß mitbenutzten Traktionsanlagen-Kühlkreislaufs nötig.

Die vorliegende Erfindung ermöglicht durch den benötigten, lediglich geringen Bauraum eine relativ freie Positionswahl der Komponenten der Kühl-Anordnung im Triebfahrzeug.

Die vorliegende Erfindung erlaubt die Realisierung eines zentralen Kühlkonzepts (z.B. je Triebfahrzeug ist eine Kühl-Anordnung vorgesehen) oder eines dezentralen Konzepts (z.B. je Aufenthaltsraum ist eine Kühl-Anordnung vorgesehen).

Durch das Zusammenwirken der drei Kreisläufe kann bislang benötigte Kühlleistung eingespart werden. Damit werden Bauraum, Gewicht, Kosten in Konstruktion und Fertigung des Triebfahrzeugs eingespart.

Folgende Betrachtung eines Heizfalls (d.h. kalte Umgebungsluft und Heizbedarf im Personenaufenthaltsraum) zeigt einen weiteren Vorteil:
Dem dritten Trägermedium kann über den ersten Kreislauf bei einer Betriebsart "Wärmepumpe" auch Wärme entzogen und dem zweiten Kreislauf zugeführt werden. Dadurch sinkt der Energiebedarf für eine benötigte Heizung des Personenaufenthaltsraums. Gleichzeitig wird das dritte Trägermedium derart gekühlt, dass der Lüfter des dritten Kreislaufs energiesparend betrieben werden kann (d.h. er wird bei langsamerer Drehzahl und/oder bei kleineren Einschaltdauern betrieben).

Durch die volumenbezogene Wärmleitfähigkeit der flüssigen Trägermedien sind konstruktiv bedingte Wärmedurchgangszahlen in den Wärmetauschern um ein Vielfaches höher, als bei einer Verwendung von Luft zur Wärmeabfuhr beim Verflüssiger.

Das nötige Volumen zum Transport von Wärmeleistung ist aufgrund der Wärmekapazität der flüssigen Trägermedien um ein Vielfaches geringer als bei der bekannten Verwendung von Luft zur Wärmeabfuhr beim Verflüssiger.

Die höchsten Kühlleistungen der Traktionsanlage sind bei hohen Fahrleistungen (d.h. bei einem hohen Produkt aus Fahrgeschwindigkeit und Zugkraft) nötig. Bei hohen Fahrtgeschwindigkeiten werden die von Sonneinstrahlung aufgeheizten Wände des Triebfahrzeugs durch den Fahrtwind gekühlt. Dadurch wird bei hohen Fahrtgeschwindigkeiten nicht die höchste Kälteleistung der Klimatisierung benötigt. Diese Synergie kann ausgenutzt werden, um eine gesamte installierte Kühlleistung abzusenken.

Die oben beschriebene freie Positionierung ermöglicht es auch, weiterhin brennbaren Kältemittel in vorbestimmten Bereichen (z.B. im Außenbereich) zu verwenden. Hier wird durch einfache Sicherheitsmaßnahmen (z.B. einer CO2-Löschanlage) sichergestellt, dass Brände bereits in der Entstehung schnell gelöscht werden.

Nachfolgend wird die vorliegende Erfindung beispielhaft anhand einer Zeichnung näher erläutert. Dabei zeigt:
- FIG 1: die erfindungsgemäße Anordnung in einem Prinzipschaltbild, und
- FIG 2: die in der Beschreibungseinleitung geschilderte Verwendung einer Kompressionskältemaschine zur Klimatisierung eines Schienenfahrzeugs.

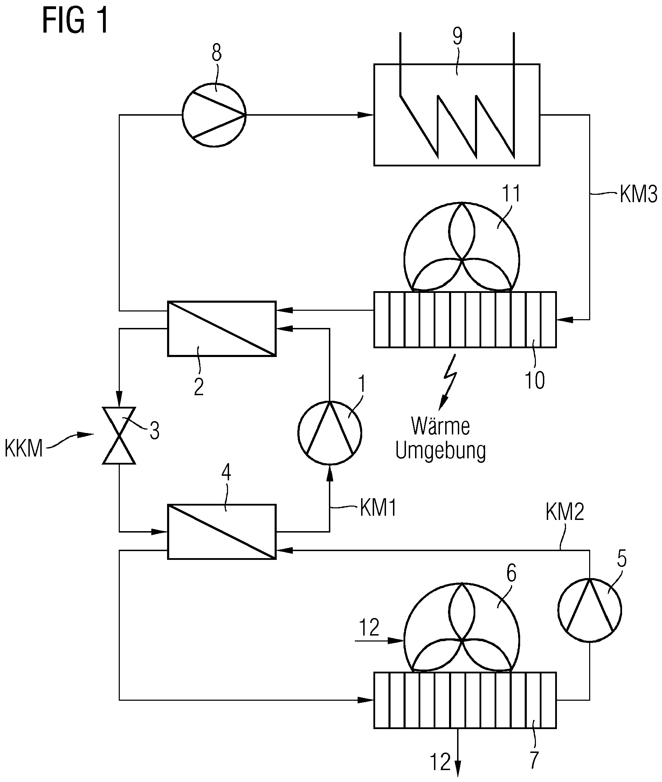

FIG 1 zeigt die erfindungsgemäße Anordnung in einem Prinzipschaltbild.

Die Kompressionskältemaschine KKM weist als Hauptkomponenten einen Kompressor 1, einen Verflüssiger 2, eine Drossel 3, einen Verdampfer 4 und ein Trägermedium KM1 auf.

Das Trägermedium KM1 wird dazu benutzt, Kälte oder Wärme innerhalb des ersten Kreislaufs zu transportieren.

Das Trägermedium KM1, das die Funktion eines Kältemittels aufweist, bewegt sich im geschlossenen ersten Kreislauf, bestehend aus den oben genannten Hauptkomponenten.

Das Trägermedium KM1 erfährt nacheinander verschiedene Änderungen im Aggregatszustand. Das Trägermedium KM1 des ersten Kreislaufs wird nachfolgend auch als erstes Trägermedium KM1 bezeichnet.

Das gasförmige erste Trägermedium KM1 wird durch den Kompressor 1 verdichtet und an den nachgeschalteten Verflüssiger 2 weitergeleitet.

Im Verflüssiger 2 kondensiert bzw. verflüssigt sich das erste Trägermedium KM1 und gibt Wärme ab.

Das flüssige erste Trägermedium KM1 gelangt an die Drossel 3, die dem Verflüssiger 2 nachgeschaltet ist.

Aufgrund einer Druckänderung wird das flüssige erste Trägermedium KM1 über die Drossel 3 entspannt und gelangt zum Verdampfer 4, der der Drossel 3 nachgeschaltet ist.

Im Verdampfer 4 verdampft das erste Trägermedium KM1 unter Wärmeaufnahme bei niedriger Temperatur.

Durch den Verdampfer 4 nimmt das erste Trägermedium KM1 Wärme aus einem zweiten Kreislauf auf, der ebenfalls geschlossen ist und ein Trägermedium KM2 beinhaltet. Der Verdampfer 4 ist als Flüssigkeits-Flüssigkeits-Wärmetauscher ausgebildet.

Der Verdampfer 4 ist in den zweiten Kreislauf, bestehend aus einem Kompressor 5, einem Lüfter 6, einem Wärmetauscher 7 und dem Trägermedium KM2 eingebunden.

Das Trägermedium KM2, das die Funktion eines Kälte- bzw. Wärmeträgers aufweist, bewegt sich in dem geschlossenen zweiten Kreislauf, bestehend aus den oben genannten Komponenten.

Der Lüfter 6 transportiert Luft 12, die aus einem Nutzraum (z.B. einem Personenaufenthaltsraum, dem Führerstand des Trieb- bzw. Schienenfahrzeugs, etc.) angesaugt wird, durch den Wärmetauscher 7.

Der Wärmetauscher 7 ist als Luft-Flüssigkeits-Wärmetauscher ausgebildet und kühlt die ihm zugeführte Luft 12, indem er ihr Wärme entzieht und diese an das Trägermedium KM2 des zweiten Kreislaufs übergibt.

Das Trägermedium KM2 des zweiten Kreislaufs wird nachfolgend als zweites Trägermedium KM2 bezeichnet.

Das erwärmte zweite Trägermedium KM2 gelangt unter Mitwirkung des Kompressors 5 vom Wärmetauscher 7 zum Verdampfer 4.

Wie geschildert entnimmt der Verdampfer 4 Wärme aus dem zweiten Trägermedium KM2, so dass letztlich das zweite Trägermedium KM2 abgekühlt wird.

Das abgekühlte zweite Trägermedium KM2 wird dem Wärmetauscher 7 zugeführt und dort zur Kühlung bzw. zum Wärmeentzug der zugeführten Luft 12 verwendet.

Erfindungsgemäß ist der Verflüssiger 2 der Kompressionskältemaschine als Flüssigkeits-Flüssigkeits-Wärmetauscher ausgebildet und in einen dritten Kreislauf eingebunden.

Der dritte Kreislauf wiederum ist im Triebfahrzeug vorgesehen, um dort Traktionsanlagen zu kühlen.

Der dritte Kreislauf beinhaltet neben dem Verflüssiger 2 einen Kompressor 8, einen Lüfter 11, einen Wärmetauscher 10 und ein Trägermedium KM3.

Der Wärmetauscher 10 ist als Flüssigkeits-Luft-Wärmetauscher ausgebildet.

Der dritte Kreislauf beinhaltet darüber hinaus einen weiteren Wärmetauscher 9, der mit Traktionsanlagen des Triebfahrzeugs gekoppelt ist. Durch ihn wird Wärme der Traktionsanlagen an das Trägermedium KM3 des dritten Kreislaufs übergeben wird.

Das Trägermedium KM3 des dritten Kreislaufs wird nachfolgend als drittes Trägermedium KM3 bezeichnet.

Das dritte Trägermedium KM3, das die Funktion eines Kälte- bzw. Wärmeträgers aufweist, bewegt sich in dem geschlossenen dritten Kreislauf, bestehend aus den oben genannten Komponenten.

Die über den Verflüssiger 2 abgegebene Wärme des ersten Kreislaufs wird dem dritten Trägermedium KM3 zugeführt, das über den Kompressor 8 an den Wärmetauscher 9 gelangt.

Das dritte Trägermedium KM3 nimmt dort weitere Wärme der Traktionsanlagen auf und wird dem Wärmetauscher 10 zugeführt.

Durch den Lüfter 11 wird Umgebungsluft dem Wärmetauscher 10 zugeführt, der als Flüssigkeits-Luft-Wärmetauscher ausgebildet ist.

Durch den Wärmetauscher 10 wird die Wärme des dritten Trägermediums KM3 an die Umgebungsluft übergeben und damit aus dem dritten Trägermedium KM3 entfernt, das wieder abkühlt und erneut zum Verflüssiger 2 gelangt.

Zusammengefasst wird im zweiten Kreislauf Wärme der Luft 10 entnommen und zum Verdampfer 4 transportiert. Durch den Verdampfer 4 wird die Wärme vom ersten Kreislauf an den zweiten Kreislauf übergeben und zum Verflüssiger 2 transportiert.

Durch den Verflüssiger 2 wird die Wärme vom ersten Kreislauf an den dritten Kreislauf übergeben und zum Wärmetauscher 10 transportiert.

Durch den Wärmetauscher 10 wird die Wärme an die Umwelt, insbesondere an die Umgebungsluft, abgegeben.

## Patentansprüche

1. Anordnung zur Kälteerzeugung für ein Triebfahrzeug,
- mit einem geschlossenen ersten Kreislauf, der als Kompressions-Kältemaschine (KKM) ausgebildet ist, und ein Kältemittel als erstes Trägermedium (KM1), einen Verdampfer (4), der als Flüssigkeits-Flüssigkeits-Wärmetauscher ausgebildet ist, einen Verflüssiger (2), der als Flüssigkeits-Flüssigkeits-Wärmetauscher ausgebildet ist, einen Kompressor (1) und eine Drossel (3) aufweist, so dass das erste Trägermedium (KM1) vom Verdampfer (4) über den Kompressor (1) zum Verflüssiger (2) und vom Verflüssiger (2) über die Drossel (3) zurück zum Verdampfer (4) gelangt,
- mit einem geschlossenen zweiten Kreislauf, der den Verdampfer (4), einen Kompressor (5), einen Lüfter (6), einen Wärmetauscher (7) sowie ein flüssiges zweites Trägermedium (KM2) zum Wärmetransport aufweist, so dass das zweite Trägermedium (KM2) vom Wärmetauscher (7) über den Kompressor (5) zum Verdampfer (4) und vom Verdampfer (4) zurück zum Wärmetauscher (7) gelangt,
- mit einem geschlossenen dritten Kreislauf, der den Verflüssiger (2), einen ersten Wärmetauscher (10), einen zweiten Wärmetauscher (9), ein flüssiges drittes Trägermedium zum Wärmetransport sowie einen Kompressor (8) aufweist, so dass das dritte Trägermedium (KM3) vom Verflüssiger (2) über den Kompressor (8) zum zweiten Wärmetauscher (9) und von diesem über den ersten Wärmetauscher (10) zurück zum Verflüssiger (2) gelangt,
- bei der der zweite Kreislauf über den Verdampfer (4) mit dem ersten Kreislauf gekoppelt ist,
- bei der der erste Kreislauf über den Verflüssiger (2) mit dem dritten Kreislauf gekoppelt ist,
- bei der der zweite Kreislauf derart ausgebildet ist, dass für Kühlungszwecke Wärme an einem vorbestimmten Ort entnommen, an das zweite Trägermedium (KM2) übergeben wird und die Wärme durch das zweite Trägermedium an den Verdampfer (4) zur Wärmeübergabe an den ersten Kreislauf gelangt,
- bei der der erste Kreislauf derart ausgestaltet ist, dass Wärme über den Verdampfer (4) an das erste Trägermedium (KM1) übergeben wird und durch dieses an den Verflüssiger (2) zur Wärmeabgabe an den dritten Kreislauf gelangt,
- bei der der zweite Wärmetauscher (9) des dritten Kreislaufs zur Kühlung von Traktionsanlagen des Triebfahrzeugs ausgebildet ist und angeordnet sein kann, so dass Wärme der Traktionsanlagen dem dritten Trägermedium (KM3) zugeführt wird,
- bei der der dritte Kreislauf derart ausgebildet ist, dass Wärme des ersten Kreislaufs über den Verflüssiger (2) an das dritte Trägermedium (KM3) übergeben wird und diese Wärme zusammen mit der Wärme der Traktionsanlagen durch den ersten Wärmetauscher (10) an die Umwelt übertragen wird.

2. Anordnung nach einem der vorhergehenden Ansprüche, bei der der zweite Kreislauf derart ausgebildet ist, dass für Kühlungszwecke Wärme von einer Komponente des Triebfahrzeugs und/oder Wärme von einem Personenaufenthaltsraum des Triebfahrzeugs und/oder Wärme aus der Luft des Personenaufenthaltsraums entnommen wird.

3. Anordnung nach Anspruch 2, bei der der zweite Kreislauf derart ausgebildet ist, dass durch den Wärmetauscher (7) Wärme von der Komponente und/oder Wärme aus der Luft des Personenaufenthaltsraums entnommen und an das zweite Trägermedium (KM2) übergeben wird.

4. Anordnung nach einem der vorhergehenden Ansprüche,
- bei der der Wärmetauscher (7) des zweiten Kreislaufs als Luft-Flüssigkeits-Wärmetauscher ausgebildet ist,
- bei der der erste Wärmetauscher (10) des dritten Kreislaufs als Flüssigkeits-Luft-Wärmetauscher ausgebildet ist,
- bei der das zweite Trägermedium und das dritte Trägermedium Wasser, insbesondere ein mit einem Frostschutzmittel versetztes Wasser, ist.

## Claims

1. Refrigeration arrangement for a traction vehicle,
- having a closed first circuit which is designed as a compression refrigeration machine (KKM) and which has a refrigerant as first carrier medium (KM1), an evaporator (4) designed as a liquid-liquid heat exchanger, a condenser (2) designed as a liquid-liquid heat exchanger, a compressor (1), and a restrictor (3), such that the first carrier medium (KM1) passes from the evaporator (4) via the compressor (1) to the condenser (2) and from the condenser (2) via the restrictor (3) back to the evaporator (4),
- having a closed second circuit which has the evaporator (4), a compressor (5), a fan (6), a heat exchanger (7) and a liquid second carrier medium (KM2) for transporting heat, such that the second carrier medium (KM2) passes from the heat exchanger (7) via the compressor (5) to the evaporator (4) and from the evaporator (4) back to the heat exchanger (7),
- having a closed third circuit which has the condenser (2), a first heat exchanger (10), a second heat exchanger (9), a liquid third carrier medium for transporting heat, and a compressor (8), such that the third carrier medium (KM3) passes from the condenser (2) via the compressor (8) to the second heat exchanger (9) and from the latter via the first heat exchanger (10) back to the condenser (2),
- in which refrigeration arrangement the second circuit is coupled via the evaporator (4) to the first circuit,
- in which refrigeration arrangement the first circuit is coupled via the condenser (2) to the third circuit,
- in which refrigeration arrangement the second circuit is designed such that, for cooling purposes, heat is extracted at a predetermined location and transferred to the second carrier medium (KM2), and the heat passes by means of the second carrier medium to the evaporator (4) for the transfer of heat to the first circuit,
- in which refrigeration arrangement the first circuit is configured such that heat is transferred via the evaporator (4) to the first carrier medium (KM1) and passes by means of the latter to the condenser (2) for the release of heat to the third circuit,
- in which refrigeration arrangement the second heat exchanger (9) of the third circuit is designed for cooling traction systems of the traction vehicle and can be arranged such that heat of the traction systems is supplied to the third carrier medium (KM3),
- in which refrigeration arrangement the third circuit is designed such that heat of the first circuit is transferred via the condenser (2) to the third carrier medium (KM3) and said heat is transferred, together with the heat of the traction systems, by means of the first heat exchanger (10) to the environment.

2. Arrangement according to any of the preceding claims, in which the second circuit is designed such that, for cooling purposes, heat is extracted from a component of the traction vehicle and/or heat is extracted from a passenger compartment of the traction vehicle and/or heat is extracted from the air of the passenger compartment.

3. Arrangement according to Claim 2, in which the second circuit is designed such that, by means of the heat exchanger (7), heat is extracted from the component, and/or heat is extracted from the air of the passenger compartment, and is transferred to the second carrier medium (KM2).

4. Arrangement according to any of the preceding claims,
- in which arrangement the heat exchanger (7) of the second circuit is designed as an air-liquid heat exchanger,
- in which arrangement the first heat exchanger (10) of the third circuit is designed as a liquid-air heat exchanger,
- in which arrangement the second carrier medium and the third carrier medium is water, in particular a water with an added antifreeze agent.

## Revendications

1. Agencement pour la production de froid pour un véhicule tracteur,
- avec un premier circuit fermé, lequel est conçu en tant que machine frigorifique à compression (KKM), et comprend un réfrigérant en tant que premier milieu porteur (KM1), un évaporateur (4), lequel est conçu en tant qu'échangeur de chaleur liquide-liquide, un condenseur (2), lequel est conçu en tant qu'échangeur de chaleur liquide-liquide, un compresseur (1) et un étrangleur (3), de telle sorte que le premier milieu porteur (KM1) passe de l'évaporateur (4) par l'intermédiaire du compresseur (1) au condenseur (2) et repasse du condenseur (2) par l'intermédiaire de l'étrangleur (3) à l'évaporateur (4),
- avec un deuxième circuit fermé, lequel comprend l'évaporateur (4), un compresseur (5), un ventilateur (6), un échangeur de chaleur (7) ainsi qu'un deuxième milieu porteur liquide (KM2) pour le transport de chaleur, de telle sorte que le deuxième milieu porteur (KM2) passe de l'échangeur de chaleur (7) par l'intermédiaire du compresseur (5) à l'évaporateur (4) et repasse de l'évaporateur (4) à l'échangeur de chaleur (7),
- avec un troisième circuit fermé, lequel comprend le condenseur (2), un premier échangeur de chaleur (10), un deuxième échangeur de chaleur (9), un troisième milieu porteur liquide pour le transport de chaleur ainsi qu'un compresseur (8), de telle sorte que le troisième milieu porteur (KM3) passe du condenseur (2) par l'intermédiaire du compresseur (8) au deuxième échangeur de chaleur (9) et repasse de celui-ci par l'intermédiaire du premier échangeur de chaleur (10) au condenseur (2),
- dans lequel le deuxième circuit est raccordé par l'intermédiaire de l'évaporateur (4) au premier circuit,
- dans lequel le premier circuit est raccordé par l'intermédiaire du condenseur (2) au troisième circuit,
- dans lequel le deuxième circuit est conçu de telle sorte qu'à des fins de refroidissement, de la chaleur soit extraite en un emplacement prédéterminé, transférée au deuxième milieu porteur (KM2), et que la chaleur passe par le deuxième milieu porteur à l'évaporateur (4) pour le transfert de chaleur au premier circuit,
- dans lequel le premier circuit est configuré de telle sorte que de la chaleur soit transférée par l'intermédiaire de l'évaporateur (4) au premier milieu porteur (KM1) et passe par celui-ci au condenseur (2) pour la distribution de chaleur au troisième circuit,
- dans lequel le deuxième échangeur de chaleur (9) du troisième circuit est conçu pour le refroidissement d'installations de traction du véhicule tracteur et peut être disposé de telle sorte que de la chaleur des installations de traction soit apportée au troisième milieu porteur (KM3),
- dans lequel le troisième circuit est conçu de telle sorte que de la chaleur du premier circuit soit transférée par l'intermédiaire du condenseur (2) au troisième milieu porteur (KM3) et que cette chaleur soit transmise en même temps que la chaleur des installations de traction par le premier échangeur de chaleur (10) à l'environnement.

2. Agencement selon l'une des revendications précédentes, dans lequel le deuxième circuit est conçu de telle sorte qu'à des fins de refroidissement, de la chaleur soit extraite d'un composant du véhicule tracteur et/ou de la chaleur soit extraite d'un habitacle du véhicule tracteur et/ou de la chaleur soit extraite de l'air de l'habitacle.

3. Agencement selon la revendication 2, dans lequel le deuxième circuit est conçu de telle sorte que, par l'échangeur de chaleur (7), de la chaleur soit extraite du composant et/ou de la chaleur soit extraite de l'air de l'habitacle et transférée au deuxième milieu porteur (KM2).

4. Agencement selon l'une des revendications précédentes,
- dans lequel l'échangeur de chaleur (7) du deuxième circuit est conçu en tant qu'échangeur de chaleur airliquide,
- dans lequel le premier échangeur de chaleur (10) du troisième circuit est conçu en tant qu'échangeur de chaleur liquide-air,
- dans lequel le deuxième milieu porteur et le troisième milieu porteur sont de l'eau, en particulier une eau additionnée d'un antigel.
